# EUROPEAN PATENT APPLICATION

(11) **EP 2 823 947 A1**
(43) Date of publication of application: **14.01.2015**
(21) Application number: 14175392.1
(22) Date of filing: 02.07.2014
(51) Int. Cl.: B29C 47/10, B29C 47/60, B29K 81/00, B29K 105/12

(54) **Method of manufacturing electrical insulating resin material and rolling bearing**

(30) Priority: 12.07.2013 JP 2013146861
(71) Applicant: JTEKT Corporation, Osaka-shi, Osaka 542-8502 (JP)
(72) Inventor: Miyake, Kazunori, Osaki-shi, Osaka 542-8502 (JP)
(74) Representative: Winter, Brandl, Fürniss, Hübner, Röss, Kaiser, Polte - Partnerschaft mbB

(57) **Abstract**

A part of the total amount of heat dissipation additive to be blended and the total amount of PPS resin to be blended are supplied into a kneading extruder having a screw body with L/D of 50 to 100, from a first material supply port and then mixed and kneaded. Then, the remainder of the heat dissipation additive and the total amount of reinforced fibers to be blended are supplied into the kneading extruder from a second material supply port, and then mixed and kneaded. Thus, there is obtained an electrical insulating resin material containing 15 to 40% of the reinforced fibers by mass, and 5 to 45% of the PPS resin by mass, and further containing the remaining mass% of the heat dissipation additive so that the total mass% of the materials contained in the electrical insulating resin material is 100%.

## Description

### BACKGROUND OF THE INVENTION

### 1. Field of the Invention

The invention relates to a method of manufacturing an electrical insulating resin material and relates also to a rolling bearing.

### 2. Description of Related Art

If an electric current flows in a rolling bearing used in an electric motor for, for example, a railway vehicle for some reason during operation of the rolling bearing, electrolytic corrosion may occur on, for example, rolling contact surfaces. Thus, there has been proposed a rolling bearing in which, for example, the outer periphery of an outer ring is coated with an electrical insulating film made of a resin material containing glass fibers and polyphenylene sulfide resin (refer to, for example, Japanese Patent Application Publication No. 3-277818 (JP 3-277818 A)). However, as the travelling speed of, for example, railway vehicles becomes higher, the heating value of the rolling bearing during rotation of a shaft tends to become higher, and as a result, the useful life of the rolling bearing may be shortened. Meanwhile, a resin material containing synthetic resin is manufactured by mixing and kneading materials in a kneading extruder (refer to, for example, Japanese Patent No. 5041209).

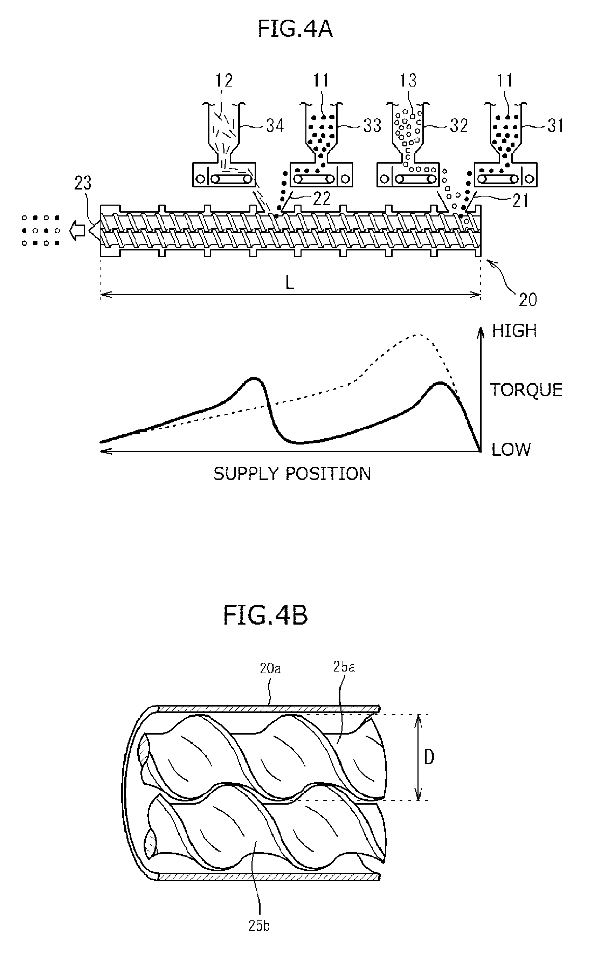

However, when all the materials are supplied into the mixing and kneading extruder from a material supply port of the mixing and kneading extruder and are then mixed and kneaded, the viscosity of a mixture of the materials is abruptly increased. For example, as indicated by a dashed line in FIG. 4A, the agitation torque near the material supply port is abruptly and remarkably increased. Thus, during the mixing and kneading of the materials, an abnormal temperature rise is caused, and further, the materials leak from the material supply port. As a result, it is not possible to sufficiently mix and uniformly disperse the materials, and therefore the tensile strength of the obtained resin material may be lowered due to breakage of the glass fibers. Thus, with the above-described method, it is difficult to manufacture an electrical insulating resin material that has both high electrical insulating property and high heat dissipation property and that ensure high strength.

### SUMMARY OF THE INVENTION

One object of the invention is to provide a method of manufacturing an electrical insulating resin material that ensure both high electrical insulating property and high heat dissipation property and also ensure high strength, and a rolling bearing having both high electrical insulating property and high heat dissipation property and also having a long useful life.

An aspect of the invention relates to a method of manufacturing an electrical insulating resin material, the method being executed with use of an kneading extruder including a kneading extruder body that has a screw body accommodated in a tubular barrel and that moves materials toward a discharge port while mixing and kneading the materials and then extrudes a mixture of the materials from the discharge port, a first material supply port through which a part of the materials is supplied into the kneading extruder body, and a second material supply port which is disposed downstream of the first material supply port in an extruding direction and through which the remainder of the materials is supplied into the kneading extruder body. According to the method, a part of the total amount of heat dissipation additive to be blended and the total amount of polyphenylene sulfide resin to be blended are supplied into the kneading extruder body from the first material supply port and then the supplied heat dissipation additive and the supplied polyphenylene sulfide resin are mixed and kneaded. Then, the remainder of the heat dissipation additive to be blended and a total amount of reinforced fibers to be blended are supplied into the kneading extruder body from the second material supply port and the heat dissipation additive supplied from the second material supply port, the reinforced fibers supplied from the second material supply port and a mixture of the heat dissipation additive and the polyphenylene sulfide resin that are supplied from the first material supply port are mixed and kneaded. In this way, there is manufactured an electrical insulating resin material containing 15 to 40% of the reinforced fibers by mass, and 5 to 45% of the polyphenylene sulfide resin by mass, and further containing the remaining mass% of the heat dissipation additive so that the total mass% of the materials contained in the electrical insulating resin material is 100%. A value of the ratio (L/D) of a longitudinal length L of the screw body to a maximum diameter D of the screw body is within a range from 50 to 100. The materials are mixed and kneaded under a condition that a value of a maximum agitation torque when the remainder of the heat dissipation additive and the total amount of the reinforced fibers supplied into the kneading extruder body from the second material supply port are mixed and kneaded, is equal to or lower than a value of a maximum agitation torque when the total amount of the heat dissipation additive and the total amount of the polyphenylene sulfide resin supplied into the kneading extruder body from the first material supply port are mixed and kneaded.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a partial sectional view illustrating a cylindrical roller bearing as a rolling bearing according to an embodiment of the invention;
FIG. 2 is a partially enlarged explanatory view illustrating the configuration of an electrical insulating film according to the embodiment of the invention;

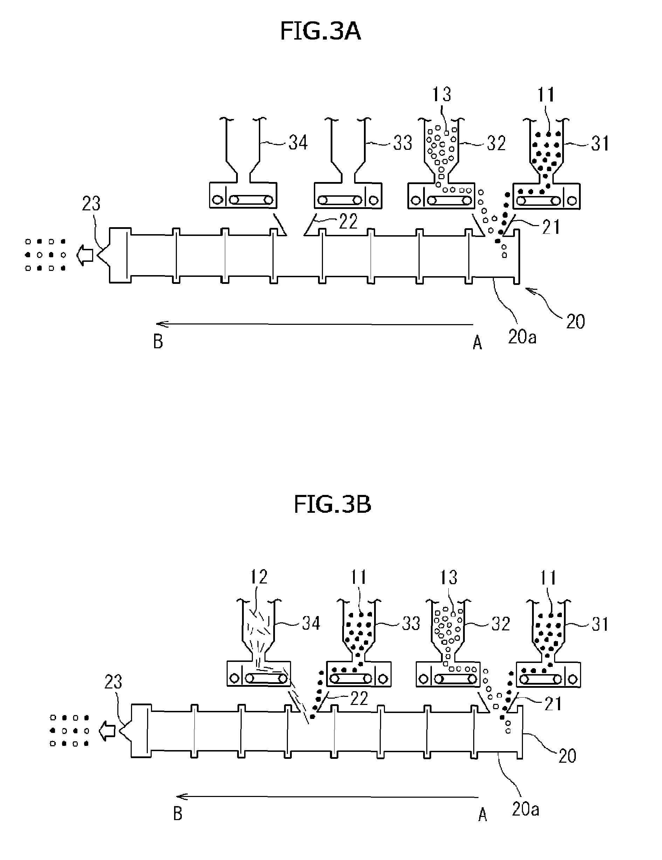

FIG. 3A and FIG. 3B are process charts illustrating an example of the method of manufacturing the electrical insulating resin material according to the embodiment of the invention, wherein FIG. 3A is an explanatory view illustrating a step in which a part of the total amount of heat dissipation additive to be blended, and the total amount of polyphenylene sulfide resin to be blended are supplied into an kneading extruder body of a twin-screw kneading extruder, and FIG. 3B is an explanatory view illustrating a step in which the remainder of the total amount of the heat dissipation additive to be blended and the total amount of the reinforced fibers to be blended are supplied into the kneading extruder body of the twin-screw kneading extruder;
FIG. 4A and FIG. 4B illustrate the configuration of the twin-screw kneading extruder used in the method of manufacturing the electrical insulating resin material according to the embodiment of the invention, wherein FIG. 4A is an explanatory view illustrating tendency of torque distribution in the twin-screw kneading extruder during supply of the materials, and FIG. 4B is a partially enlarged sectional view illustrating screws of the twin-screw kneading extruder; and
FIG. 5 is a graph illustrating the relationship between the content rate of talc in the resin material and the thermal conductivity.

### DETAILED DESCRIPTION OF EMBODIMENTS

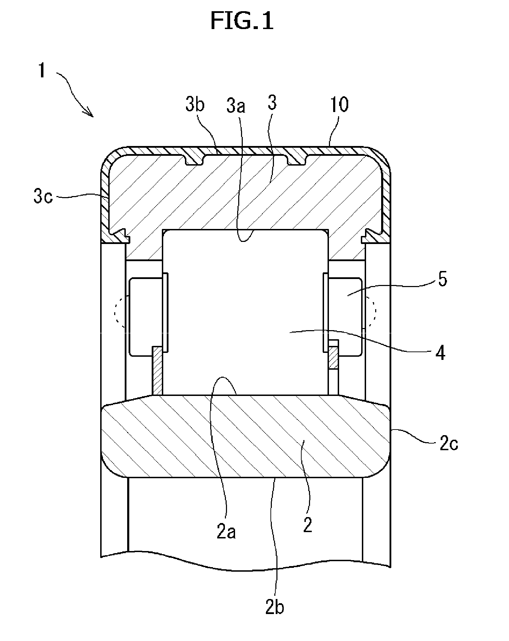

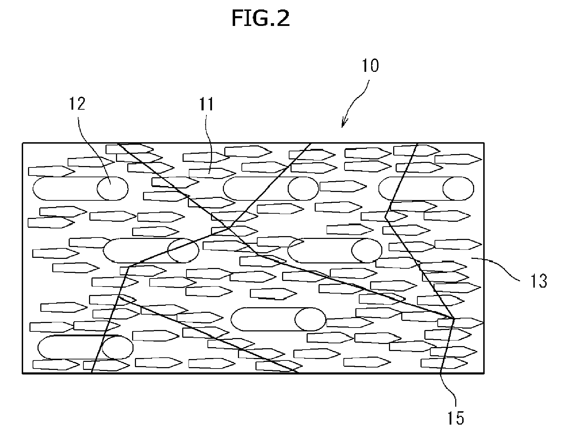

Hereinafter, a rolling bearing according to an embodiment of the invention will be described with reference to the accompanying drawings. FIG. 1 is a partial sectional view illustrating a cylindrical roller bearing 1 as a rolling bearing according to the embodiment of the invention. FIG. 2 is a partially enlarged explanatory view illustrating the configuration of an electrical insulating film 10 of the cylindrical roller bearing 1 illustrated in FIG. 1. The cylindrical roller bearing 1 illustrated in FIG. 1 includes an inner ring 2, an outer ring 3, a plurality of cylindrical rollers 4 and a cage 5. The inner ring 2 has a raceway 2a on its outer peripheral face. The outer ring 3 has a raceway 3a on its inner peripheral face. The cylindrical rollers 4 are rolling elements disposed between the raceway 2a of the inner ring 2 and the raceway 3a of the outer ring 3. The cage 5 holds the cylindrical rollers 4 at prescribed intervals in the circumferential direction of the cylindrical roller bearing 1.

In the cylindrical roller bearing 1, an outer peripheral face 3b and side faces 3c of the outer ring 3, which are made into contact with a housing (not illustrated), are coated with the electrical insulating film 10. The electrical insulating film 10 is made of an electrical insulating material that contains heat dissipation additive 11, reinforced fibers 12 and polyphenylene sulfide resin 13 (FIG. 2). The heat dissipation additive 11 has high thermal conductivity. The reinforced fibers 12 provide high strength to the electrical insulating film 10. The polyphenylene sulfide resin 13 has high electrical insulation property. In the electrical insulating film 10, masses of the heat dissipation additive 11 are made into contact with each other to form heat transmission paths 15 through which heat is transmitted. Thus, the electrical insulating film 10 is able to efficiently dissipate the heat generated in the cylindrical roller bearing 1 to the outside of the cylindrical roller bearing 1 through the heat transmission paths 15. Therefore, the cylindrical roller bearing 1 has high electrical insulation property and high strength, and also has a long useful life because a decrease in its useful life due to heat generation is restricted. Note that, in the invention, the inner peripheral face 2b and side faces 2c of the inner ring 2 may be coated with the electrical insulating film 10 when the inner ring 2 is made into contact with the housing (not illustrated) or an axle (not illustrated).

From the viewpoint of ensuring sufficient electrical insulation property, the electrical insulating film 10 preferably has an electrical conductivity of 10⁻¹⁰ S/m or lower, and more preferably has an electrical conductivity of 10⁻¹² S/m or lower. From the viewpoint of ensuring sufficient heat dissipation property, the electrical insulating film 10 preferably has a thermal conductivity of 1 W/mK or higher, and more preferably has a thermal conductivity of 2 W/mK or higher. The upper limit value of the thermal conductivity of the electrical insulating film 10 is usually 5 W/mK or lower although the upper limit value varies depending on the kind and the amount of the heat dissipation additive 11. The electrical insulating film 10 may be formed on the outer peripheral face 3b and the side faces 3c of the outer ring 3 and also on the inner peripheral face 2b and the side faces 2c of the inner ring 2 by, for example, an insert molding process that is performed with the use of the electrical insulating material containing, for example, talc as the heat dissipation additive 11, glass fibers as the reinforced fibers 12 and the polyphenylene sulfide resin 13, a mold, and the bearing rings (inner and outer rings 2, 3) on which the electrical insulating film 10 is formed.

Next, a method of manufacturing an electrical insulating resin material used for the electrical insulating film 10 will be described. FIG. 3A and FIG. 3B are process charts illustrating an example of the method of manufacturing the electrical insulating resin material according to the embodiment of the invention. FIG. 3A is an explanatory view illustrating a step in which a part of the total amount of the heat dissipation additive 11 to be blended, and the total amount of the polyphenylene sulfide resin 13 to be blended are supplied into an kneading extruder body 20a of a twin-screw kneading extruder 20 (hereinafter, referred to as "first material supply step"). FIG. 3B is an explanatory view illustrating a step in which the remainder of the total amount of the heat dissipation additive 11 to be blended and the total amount of the reinforced fibers 12 to be blended are supplied into the kneading extruder body 20a of the twin-screw kneading extruder 20 (hereinafter, referred to as "second material supply step).

In the method of manufacturing the electrical insulating resin material according to the present embodiment, for example, the twin-screw kneading extruder 20 may be used as an kneading extruder. Note that, in the present embodiment, the case where the twin-screw kneading extruder 20 having a first material supply port 21 and a second material supply port 22 as illustrated in FIG. 4A is used will be described as an example. The second material supply port 22 is located downstream of the first material supply port 21. FIG. 4A and FIG. 4B illustrate the configuration of the twin-screw kneading extruder 20 used in the method of manufacturing the electrical insulating resin material according to the embodiment of the invention. FIG. 4A is an explanatory view illustrating tendency of torque distribution in the twin-screw kneading extruder 20 during supply of the materials. FIG. 4B is a partially enlarged sectional view illustrating screws of the twin-screw kneading extruder 20. In a graph illustrated in the lower side in FIG. 4A, a continuous line indicates the torque distribution in the twin-screw kneading extruder 20 when the materials are supplied in parts into the kneading extruder body 20a through the first material supply port 21 and the second material supply port 22. The dashed line indicates the torque distribution in the twin-screw kneading extruder 20 when all the materials are supplied into the kneading extruder body 20a through the first material supply port 21. The twin-screw kneading extruder 20 illustrated in FIG. 4A includes the kneading extruder body 20a, the first material supply port 21 and the second material supply port 22. In the kneading extruder body 20a, the materials are mixed and kneaded and then the mixture is extruded to the outside through a discharge port 23. The first material supply port 21 is formed in an upstream side portion of the kneading extruder body 20a in the extruding direction, and part of the materials is supplied into the kneading extruder body 20a through the first material supply port 21. The second material supply port 22 is formed at a position downstream of the first material supply port 21, the remainder of the materials is supplied into the kneading extruder body 20a through the second material supply portion 22. Two identical screw bodies 25a, 25b that are rotatably meshed with each other and that are disposed parallel to each other are accommodated in the kneading extruder body 20a. The screw bodies 25a, 25b are configured to rotate in the same direction. A first heat dissipation additive supply portion 31 and a resin supply portion 32 are disposed above the first material supply port 21. The first heat dissipation additive supply portion 31 supplies a part of the total amount of the heat dissipation additive 11 into the first material supply port 21. The resin supply portion 32 supplies the polyphenylene sulfide resin 13 into the first material supply port 21. A second heat dissipation additive supply portion 33 and a reinforced fiber supply portion 34 are disposed above the second material supply port 22. The second heat dissipation additive supply portion 33 supplies the remainder of the heat dissipation additive 11 into the second material supply port 22. The reinforced fiber supply portion 34 supplies the reinforced fiber 12 into the second material supply port 22. Note that agitation torque detectors such as torque detectors or pressure sensors, which are used to acquire agitation torque, are respectively disposed near the first material supply port 21 and the second material supply port 22 in the kneading extruder body 20a.

In the twin-screw kneading extruder 20, a longitudinal length L (refer to FIG. 4A) and a maximum diameter D (refer to FIG. 4B) of each of the screw bodies 25a, 25b is set such that a ratio L/D falls within a range from 50 to 100. The larger the value of ratio L/D is, the longer the time from the supply of the materials to the extrusion of the electrical insulating material from the discharge port 23 is and the mixing and kneading time tends to be longer. The value of the ratio L/D should be 50 or higher, and is preferably 70 or higher from the viewpoint of uniformly dispersing the materials and ensuring a sufficient mixing and kneading time, thereby manufacturing a homogeneous electrical insulating material. Further, the value of the ratio L/D should be 100 or lower, and is preferably 80 or lower from the viewpoint of preventing breakage of the reinforced fibers 12 and reducing the time during which the reinforced fibers 12 are exposed to a high temperature due to retention of the materials during the mixing and kneading, thereby suppressing deterioration of the resin.

In the method of manufacturing the electrical insulating resin material according to the present embodiment, the twin-screw kneading extruder 20 having the above-described ratio L/D is used. The materials are mixed and kneaded under the condition that the value of the maximum agitation torque when the remainder of the heat dissipation additive 11 and the total amount of the reinforced fibers 12 are both supplied into the kneading extruder body 20a from the second material supply port 22 and then mixed and kneaded, is equal to or lower than the value of the maximum agitation torque when the total amount of the heat dissipation additive 11 and the total amount of the polyphenylene sulfide resin 13 are both supplied into the kneading extruder body 20a from the first material supply port 21 and then mixed and kneaded. Note that the values of the maximum agitation torques are the maximum values of torques measured by the agitation torque detectors (not illustrated) that are disposed in the twin-screw kneading extruder 20. In the method of manufacturing the electrical insulating resin material in the present embodiment, the above-described configuration is adopted. Thus, it is possible to suppress an abrupt increase in the viscosity of the materials, which occurs when all the materials are supplied into the kneading extruder body 20a of the twin-screw kneading extruder 20 from the first material supply port 21 and then mixed and kneaded. Further, as indicated by the continuous line in FIG. 4A, it is possible to suppress a remarkable increase in the agitation torque near the first material supply port 21. Thus, it is possible to suppress occurrence of abnormal temperature rise during the mixing and kneading of the materials. As a result, the materials are sufficiently mixed and kneaded. Further, breakage of the reinforced fibers 12 during the mixing and kneading of the materials is suppressed.

The materials are more efficiently mixed and kneaded, and breakage of the reinforced fibers 12 is during the mixing and kneading of the materials is more reliably suppressed. From this viewpoint, the value of the maximum agitation torque when a part of the total amount of the heat dissipation additive 11 and the total amount of the polyphenylene sulfide resin 13 are both supplied into the kneading extruder body 20a of the twin-screw kneading extruder 20 from the first material supply port 21 and then mixed and kneaded is preferably equal to the value of the maximum agitation torque when the remainder of the heat dissipation additive 11 and the total amount of the reinforced fibers 12 are both supplied into the kneading extruder body 20a of the twin-screw kneading extruder 20 from the second material supply port 22 and then mixed and kneaded.

As the heat dissipation additive 11, for example, talc may be used. When the talc is used as the heat dissipation additive 11, sufficient heat dissipation property is ensured. The shape and size of each mass of the heat dissipation additive 11 are not particularly limited as long as sufficient heat dissipation property is ensured. The content rate of the heat dissipation additive 11 in the electrical insulating resin material should be 40 mass% by mass or higher and is preferably 50% by mass or higher from the viewpoint of ensuring sufficient heat dissipation property. The upper limit of the content rate of the heat dissipation additive 11 in the electrical insulating resin material is not particularly limited as long as the total mass% of the materials contained in the electrical insulating material is 100%. The content rate of the heat dissipation additive 11 should be 80% by mass or lower is preferably 70% by mass or lower and is more preferably 60% by mass or lower from the viewpoint of ensuring the ease in the mixing and kneading of the materials during the manufacturing.

As the reinforced fibers 12, there may be used, for example, glass fibers, whiskers such as zinc oxide whiskers, calcium carbonate whiskers or titanate whiskers. Among these reinforced fibers, the glass fibers are preferable because the glass fibers provide a sufficient strength and are easy to handle. The reinforced fibers 12 have a diameter that is preferably 13 µm or smaller and is more preferably 10 µm or smaller from the viewpoint of ensuring sufficient moldability and enhancing the strength. Further, the reinforced fibers 12 have a length that is preferably 500 µm or longer and is more preferably 2,000 µm or longer from the viewpoint of ensuring sufficient strength. Further, the reinforced fibers 12 has a length that is preferably 10,000 µm or shorter and is more preferably 5,000 µm or shorter from the viewpoint of ensuring sufficient moldability. Note that the diameter and length of the reinforced fibers 12 are the average diameter and average length among 300 reinforced fibers 12. The reinforced fibers 12 have an aspect ratio that is preferably 20 or higher and is more preferably 100 or higher from the viewpoint of ensuring sufficient strength. The content rate of the reinforced fibers 12 in the electrical insulating resin material should be 15% by mass or higher and is preferably 25% by mass or higher from the viewpoint of ensuring sufficient strength, but should be 40% by mass or lower and is preferably 30% by mass or lower from the viewpoint of ensuring sufficient moldability.

The polyphenylene sulfide resin 13 is a chemical compound having a molecular weight of 3,000 to 50,000 and containing a structural unit having a molar concentration of 70 to 100 mol% and expressed by the following formula (1).

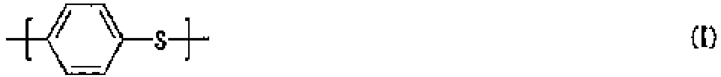

When the molar concentration of the structural unit expressed by the formula (1) is 70 mol% or higher but lower than 100 mol%, the polyphenylene sulfide resin 13 is a chemical compound having a molecular weight within a range from 3,000 to 50,000, and containing the structural unit expressed by the formula (I) having a molar concentration that is 70 mol% or higher but lower than 100 mol%, and at least one kind of structural unit having a molar concentration that is above 0 mol% but 30 mol% or lower and selected from a group consisting of a structural unit expressed by the following formula (II), 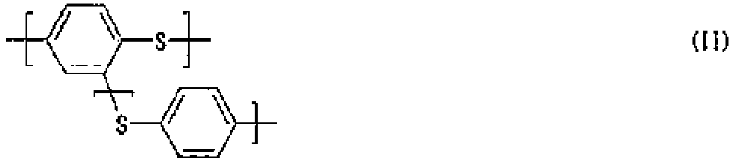 a structural unit expressed by the following formula (III), 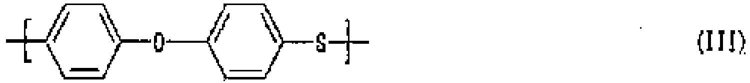 a structural unit expressed by the following formula (IV), 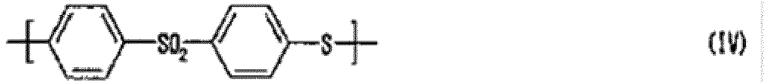 a structural unit expressed by the following formula (V), 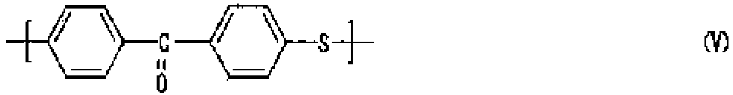 a structural unit expressed by the following formula (VI), 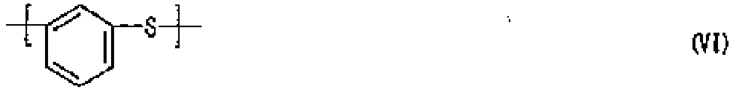 a structural unit expressed by the following formula (VII), and 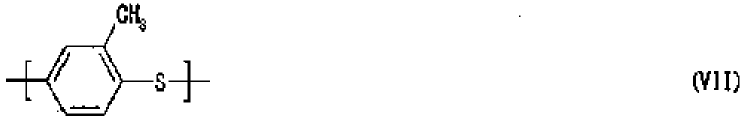 a structural unit expressed by the following formula (VIII).

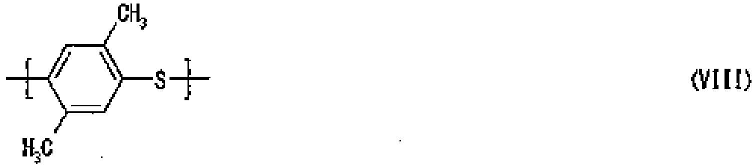

The above-described molecular weight is preferably 3,000 or higher and is more preferably 10,000 or higher from the viewpoint of ensuring sufficient creeping property and sufficient fatigue-resistant property. The molecular weight is preferably 50,000 or lower and is more preferably 30,000 or lower from the viewpoint of suppressing an increase in the viscosity of the mixture of the materials, thereby suppressing abrupt increases in the agitation torque and the temperature and from the viewpoint of ensuring the ease in the mixing and kneading of the materials during the manufacturing. The polyphenylene sulfide resin 13 is usually in the form of pellets. The content rate of the polyphenylene sulfide resin 13 in the electrical insulating resin material is preferably 5% by mass or higher and is more preferably 20% by mass or higher from the viewpoint of ensuring sufficient insulation property and sufficient strength. The content rate of the polyphenylene sulfide resin 13 in the electrical insulating resin material is preferably 45% by mass or lower and is more preferably 30% by mass or lower from the viewpoint of suppressing reduction in the heat dissipation property.

The electrical insulating resin material may further contain, for example, a mold release agent or an oxidation stabilizer (thermal stabilizer). As the mold release, for example, stearic acid may be used, but the invention is limited to this example. Such stearic acid allows the molded electrical insulating resin material to be easily removed from, for example, a mold, and suppresses shear resistance.

In the method of manufacturing the electrical insulating resin material in the present embodiment, first, in the first material supply step, a part of the total amount of the heat dissipation additive 11 and the total amount of the polyphenylene sulfide resin 13 are supplied into the kneading extruder body 20a of the twin-screw kneading extruder 20 from the first material supply port 21 (refer to FIG. 3A). At this time, the materials (the heat dissipation additive 11 and the polyphenylene sulfide resin 13) supplied into the kneading extruder body 20a from the first material supply portion 21 are moved in the direction from A to B in FIG. 3A while being mixed and kneaded.

In the first material supply step, the content of the heat dissipation additive 11 with respect to 100 parts by mass of the polyphenylene sulfide resin 13 is set to a value that is preferably 50 parts by mass or higher and is more preferably 80 parts by mass or higher from the viewpoint of uniformly dispersing the materials. The content of the heat dissipation additive 11 is set to a value that is preferably 150 parts by mass or lower and is more preferably 100 parts by mass or lower from the viewpoint of suppressing an increase in the torque during the mixing and kneading and suppressing back-flow and leakage of the materials.

During the mixing and kneading, the screw bodies 25a, 25b are rotated at a rotational speed that is preferably 50 rpm or higher from the viewpoint of uniformly dispersing the materials but preferably 200 rpm or lower from the viewpoint of restraining breakage of the reinforced fibers 12, thereby ensuring sufficient strength.

Then, in the second material supply step (refer to FIG. 3B), the remainder of the heat dissipation additive 11 and the total amount of the reinforced fibers 12 are supplied into the kneading extruder body 20a of the twin-screw kneading extruder 20 from the second material supply port 22, and are then mixed and kneaded at a rotational speed within the range from 50 to 200 rpm. Thus, the electrical insulating resin material is moved in the direction from A to B in FIG. 3B, and is extruded from the discharge port 23. During the mixing and kneading, the screw bodies 25a, 25b are rotated at the same rotational speed as that of the screw bodies 25a, 25b in the first material supply step.

After the remainder of the total amount of the heat dissipation additive 11 and the total amount of the reinforced fibers 12 are supplied into the kneading extruder body 20a of the twin-screw kneading extruder 20 from the second material supply port 22, the materials are mixed and kneaded at a rotational speed within the range from 50 to 200 rpm. At this time, the value of the maximum agitation torque is preferably a value equal to or lower than the value of the maximum agitation torque that is observed when the total amount of the heat dissipation additive 11 and the total amount of the polyphenylene sulfide resin 13 are supplied into the kneading extruder body 20a of the twin-screw kneading extruder 20 from the first material supply port 21 and then the materials are mixed and kneaded at a rotational speed within the range from 50 to 200 rpm. This is because it is possible to sufficiently mix and knead the materials and suppress breakage of the reinforced fibers 12 during the mixing and kneading.

When, for example, a mold release, or an oxidation stabilizer (thermal stabilizer) is further blended, the mold release or the oxidation stabilizer may be supplied into the kneading extruder body 20a from the second material supply port 22, in the second material supply step, together with the remainder of the heat dissipation additive 11 and the total amount of the reinforced fibers 12.

The thus obtained electrical insulating resin material contains 15 to 40% of the reinforced fibers 12 by mass, and 5 to 45% of the polyphenylene sulfide resin 13 by mass, and further contains the remaining mass% of the heat dissipation additive 11 so that the total mass% of the materials contained in the electrical insulating resin material is 100%. The electrical insulating resin material in the present embodiment contains 40 to 80% of the heat dissipation additive 11 by mass. Thus, the electrical insulating resin material contains a sufficient amount of the heat dissipation additive 11 with a high density so that desired thermal conductivity is ensured. As a result, masses of the heat dissipation additive 11 are easily made into contact with each other, so that it is possible to facilitate formation of the heat transmission paths 15. Further, the electrical insulating resin material in the present embodiment according to the invention contains 15 to 40% of the reinforced fibers 12 by mass, which are in the condition appropriate for ensuring sufficient strength. Thus, it is possible to ensure sufficient strength and moldability. Further, the electrical insulating resin material contains the polyphenylene sulfide resin 13 having high electrical insulation property. Thus, it is possible to ensure high electrical insulation property.

In the invention, a kneading extruder having a plurality of the second material supply ports 22 may be adopted. In this case, if the number of the second material supply ports 22 is denoted by n (n > 3), the remainder of the heat dissipation additive 11 remaining after a part the heat dissipation additive 11 is supplied into the kneading extruder body 20a from the first material supply port 21 is supplied in parts into the kneading extruder body 20a by n times. Thus, it is possible efficiently suppress an abrupt increase in the viscosity of the mixture of the materials during the mixing and kneading, thereby efficiently suppressing abnormal temperature rise.

The invention will be described in more detail on the basis of following examples, but the invention is not limited to the following examples.

First, Example 1 will be described. 2,500 grams (50% of the total amount) of talc, which may function as the heat dissipation additive 11, and 2,500 grams of the polyphenylene sulfide resin 13 were supplied into the kneading extruder body 20a of the twin-screw kneading extruder 20 (produced by Toshiba Machine Co., Ltd: product name "TEM-26SS"; L/D = 80: screw shape is square type) from the first material supply port 21 (upstream material supply port) of the twin-screw kneading extruder 20, and were then mixed and kneaded at a rotational speed of 100 rpm. At the time when the torque was stabilized, 2500 grams (50% of the total amount) of the talc and the glass fibers (diameter is 10 µm: length is 3,000 µm), which may function as the reinforced fibers 12, were supplied into the kneading extruder body 20a of the twin-screw kneading extruder 20 from the second material supply port 22 of the twin-screw kneading extruder 20, and were then mixed and kneaded at a rotational speed of 100 rpm to obtain an electrical insulating resin material containing 50% of talc by mass, 25% of the glass fibers by mass and 25% of the polyphenylene sulfide resin 13 by mass. Note that the temperature of the mixture of the materials near the second material supply port 22 was confirmed to be 278°C.

Next, Example 2 will be described. The same process as that in Example 1 was carried out except that the mixing and kneading performed at a rotational speed of 200 rpm instead of 100 rpm in Example 1, to obtain an electrical insulating resin material containing 50% of the talc by mass, 25% of the glass fibers by mass, and 25% of the polyphenylene sulfide resin 13 by mass. Note that the temperature of the mixture of the materials near the second material supply port 22 was confirmed to be 293°C.

Next, Comparative Example 1 will be described. The same process as that in Example 1 was carried out except that the mixing and kneading was performed at a rotational speed of 400 rpm instead of 100 rpm in Example 1, to obtain an electrical insulating resin material containing 50% of the talc by mass, 25% of the glass fibers by mass, and 25% the polyphenylene sulfide resin 13 by mass. Note that the temperature of the mixture of the materials near the second material supply port 22 was confirmed to be 323°C.

Next, Test Example 1 will be described. The electrical insulating resin materials obtained in Examples 1, 2 and Comparative Example 1 were molded by extrusion-molding to obtain compacts. The bending strength, bending elastic modulus, specific gravity, thermal conductivity, volume resistivity, linear thermal expansion coefficient in a flow direction, linear thermal expansion coefficient in a direction orthogonal to the flow direction (orthogonal direction), mold shrinkage factor in the flow direction and mold shrinkage factor in the orthogonal direction were measured on each of the thus obtained compacts. Further, the length of the glass fibers (glass fiber length) contained in each of the electrical insulating resin materials obtained in Examples 1, 2 and Comparative Example 1 were measured. The results of measurements are indicated in Table 1. Note that the above-described measurements are based on the following standards.
Bending strength: JIS K 7171
Bending elastic modulus: JIS K 7171
Specific gravity: JIS Z 8807
Thermal conductivity: JIS R 1611
Volume Resistivity: JIS K 6911
Linear thermal expansion coefficient in flow direction: JIS K 7197
Linear thermal expansion coefficient in orthogonal direction: JIS K 7197
Mold shrinkage factor in flow direction: JIS K 7197
Mold shrinkage factor in orthogonal direction: JIS K 7197

**Table 1**

| | | Ref. Ex. 1 | Ref. Ex.2 | Comp. Ex. 1 |
|---|---|---|---|---|
| Talc (mass%) | | 50 | 50 | 50 |
| Glass fibers (mass%) | | 25 | 25 | 25 |
| Base resin (mass%) | | Remainder | Remainder | Remainder |
| Rotational speed | rpm | 100 | 200 | 400 |
| Temperature | °C | 278 | 293 | 323 |
| Bending strength | Mpa | 130 | 127 | 103 |
| Bending elastic modulus | % | 24693 | 25198 | 23946 |
| Glass fiber length | µm | 487 | 418 | 290 |
| Specific gravity | | 2.1 | 2.1 | 2.1 |
| Thermal conductivity | W/mK | 1.4 | 1.4 | 1.4 |
| Volume resistivity | Ωcm | 1.0 × 10¹⁷ | 1.0 × 10¹⁷ | 1.0 × 10¹⁷ |
| Linear thermal expansion coefficient in flow direction | × 10⁻⁵/°C | 0.9 | 0.9 | 0.9 |
| Linear thermal expansion coefficient in orthogonal direction | × 10⁻⁵/°C | 1.3 | 1.3 | 1.3 |
| Mold shrinkage factor in flow direction | % | 0.2 | 0.2 | 0.2 |
| Mold shrinkage factor in orthogonal direction | % | 0.3 | 0.3 | 0.3 |

It is understood from the results indicated in Table 1 that the bending strength and the bending elastic modulus of each of the electrical insulating resin materials (Examples 1, 2) obtained by mixing and kneading at rotational speeds of 100 rpm, 200 rpm is higher than the bending strength and the bending elastic modulus of the electrical insulating resin material (Comparative Example 1) obtained by mixing kneading at a rotational speed of 400 rpm. The results suggest that, by performing the mixing and kneading at a rotational speed of 200 rpm or lower, preferably at a rotational speed within a range from 50 to 200 rpm, and more preferably at a rotational speed within a range from 100 to 200 rpm, the higher insulation property and heat dissipation property are ensured and an electrical insulating resin material having high strength is obtained. Further, it is expected that a rolling bearing in which at least one of the inner peripheral face of an inner ring and the outer peripheral face of an outer ring is coated with an electrical insulating film made of the electrical insulating resin material obtained by mixing and kneading the materials at a rotational speed of 200 rpm or lower, preferably at a rotational speed within the range from 50 to 200 rpm, and more preferably at a rotational speed within the range from 100 to 200 rpm, has high electrical insulation property and high heat dissipation property, thereby having a long useful life.

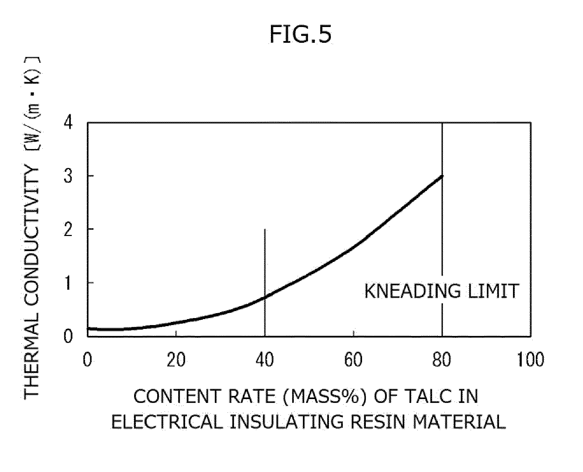

Next, Test Example 2 will be described. The same process as that in Example 1 was carried out except that the amount of the talc that is supplied into the kneading extruder body 20a of the twin-screw kneading extruder 20 from the first material supply port 21 was set to 2,000 grams, 3,000 grams or 4,000 grams, instead of 2,500 grams (50% of the total amount) in Example 1, to obtain electrical insulating resin materials. The thus obtained electrical insulating resin materials were then molded by extrusion molding to obtain compacts. Then, thermal conductivity of each of the thus obtained compacts was measured on the basis of standards stated in JIS R 1611. The relationship between the content rate of the talc in the electrical insulating resin material and the thermal conductivity observed in Test Example 2 is illustrated in FIG. 5.

The results illustrated in FIG. 5 suggest that, when the content rate of the talc in the electrical insulating resin material is 40% by mass or higher, in a rolling bearing used in an electric motor for a railway vehicle or the like, a thermal conductivity of equal to or higher than 0.8 W/mK, which is sufficient to efficiently dissipate heat to the outside of the rolling bearing, is ensured. It is deemed that the content rate of the talc in the electrical insulating resin material is preferably 70% by mass or lower, because the mixing and kneading tends to be insufficient if the content rate of the talc in the electrical insulating resin material exceeds 80% by mass.

With the method of manufacturing an electrical insulating resin material according to the invention, the heat dissipation additive in an amount sufficient to ensure desired thermal conductivity and the reinforced fibers in a condition appropriate for ensuring sufficient strength are uniformly dispersed in the polyphenylene sulfide resin that has high electrical insulation property. Thus, it is possible to obtain the electrical insulating resin material that ensures high electrical insulation property and high thermal dissipation property and also ensures high strength. The rolling bearing according to the invention has advantages that the rolling bearing has high electrical insulation property and high heat dissipation property and thus has a long useful life.

## Claims

1. A method of manufacturing an electrical insulating resin material, the method being executed with use of an kneading extruder including a kneading extruder body that has a screw body accommodated in a tubular barrel and that moves materials toward a discharge port while mixing and kneading the materials and then extrudes a mixture of the materials from the discharge port, a first material supply port through which a part of the materials is supplied into the kneading extruder body, and a second material supply port which is disposed downstream of the first material supply port in an extruding direction and through which the remainder of the materials is supplied into the kneading extruder body, the method **characterized by** comprising:
supplying a part of a total amount of heat dissipation additive to be blended and a total amount of polyphenylene sulfide resin to be blended into the kneading extruder body from the first material supply port and mixing and kneading the supplied heat dissipation additive and the supplied polyphenylene sulfide resin, and then supplying the remainder of the heat dissipation additive to be blended and a total amount of reinforced fibers to be blended into the kneading extruder body from the second material supply port and mixing and kneading the heat dissipation additive supplied from the second material supply port, the reinforced fibers supplied from the second material supply port and a mixture of the heat dissipation additive and the polyphenylene sulfide resin that are supplied from the first material supply port, to manufacture an electrical insulating resin material containing 15 to 40% of the reinforced fibers by mass, and 5 to 45% of the polyphenylene sulfide resin by mass, and further containing the remaining mass% of the heat dissipation additive so that a total mass% of the materials contained in the electrical insulating resin material is 100%, wherein
a value of a ratio (L/D) of a longitudinal length L of the screw body to a maximum diameter D of the screw body is within a range from 50 to 100, and
the materials are mixed and kneaded under a condition that a value of a maximum agitation torque when the remainder of the heat dissipation additive and the total amount of the reinforced fibers supplied into the kneading extruder body from the second material supply port are mixed and kneaded, is equal to or lower than a value of a maximum agitation torque when the total amount of the heat dissipation additive and the total amount of the polyphenylene sulfide resin supplied into the kneading extruder body from the first material supply port are mixed and kneaded.

2. The method of manufacturing an electrical insulating resin material according to claim 1, wherein a value of a maximum agitation torque when the part of the total amount of the heat dissipation additive and the total amount of the polyphenylene sulfide resin supplied into the kneading extruder body from the first material supply port are mixed and kneaded, is equal to the value of the maximum agitation torque when the remainder of the heat dissipation additive and the total amount of the reinforced fibers supplied into the kneading extruder body from the second material supply port are mixed and kneaded.

3. A rolling bearing comprising an inner ring having an inner peripheral face, and an outer ring having an outer peripheral face, at least one of the inner peripheral face of the inner ring and the outer peripheral face of the outer ring being coated with an electrical insulating film,
wherein the electrical insulating film is made of the electrical insulating resin material manufactured by the manufacturing method according to claim 1 or 2.
